# EUROPÄISCHE PATENTSCHRIFT

(11) **EP 3 449 155 B1**
(45) Veröffentlichungstag und Bekanntmachung des Hinweises auf die Patenterteilung: **11.03.2020**
(21) Anmeldenummer: 17787102.7
(22) Anmeldetag: 09.10.2017
(51) Int. Cl.: F16G 15/04

(54) **KETTENSCHLOSS**
CHAIN LOCK
JOINT DE CHAÎNE

(30) Priorität: 12.10.2016 DE 202016105708 U
(43) Veröffentlichungstag der Anmeldung: 06.03.2019
(73) Patentinhaber: Thiele GmbH & Co. KG, 58640 Iserlohn (DE)
(72) Erfinder: STELLA, Christoph, 59423 Unna (DE); NORPOTH, Bernhard, 45309 Essen (DE)
(74) Vertreter: Osterhoff, Utz
(86) Internationale Anmeldenummer: PCT/DE2017/100854
(87) Internationale Veröffentlichungsnummer: WO 2018/068790

(56) Entgegenhaltungen:
- DE-A1- 19 619 831
- DE-A1- 19 652 262
- DE-A1- 19 901 231
- DE-B- 1 140 411
- DE-U1-202012 103 455
- DE-U1-202015 101 618

## Beschreibung

Die vorliegende Erfindung betrifft ein Kettenschloss für eine Gliederkette gemäß den Merkmalen im Oberbegriff von Anspruch 1.

Aus der DE 20 2015 101 618 U1 ist ein gattungsbildendes Kettenschloss bekannt. Mit diesem Kettenschloss ist es möglich, zwei Kettenstränge zu verbinden. Es werden zwei U-förmig ausgebildete Schlosshälften mit ihren jeweiligen Schenkeln in Querrichtung miteinander verriegelt. Dazu sind in den Schenkeln jeweils gegenüber den Schenkeln überstehende Zähne bzw. gegenüber den Schenkeln zurückversetzte Taschen ausgebildet, wobei Zähne und Taschen bei Ausführen der Verriegelungsbewegung quer zur Längsrichtung formschlüssig ineinander greifen. Damit nunmehr die zwei formschlüssig miteinander gekoppelten U-förmigen Schlosshälften verriegelt bleiben, wird in einem mittleren Bereich ein Sicherungselement, ausgebildet aus zwei Sicherungsbausteinen, eingesetzt. Die Sicherungsbausteine werden von entgegengesetzten Seiten eingesetzt und durch einen Sicherungsstift formschlüssig miteinander gekoppelt.

Weiterhin ist aus der ebenfalls gattungsbildenden DE 20 2012 103 455 U1 ein Kettenschloss bekannt, welches zwei über seine Schenkel koppelbare Gliedbügel und einen quer zwischen die Schenkel im gekoppelten Zustand einschiebbaren Steg aufweist. Ein Schenkel jedes Gliedbügels weist einen Halsabschnitt sowie einen demgegenüber verdickten Zapfen auf. An dem diesen gegenüberliegenden anderen Schenkel sind eine hierzu korrespondierende Halsausnehmung und eine Zapfenausnehmung vorgesehen. Die zwei ineinander gesteckten Gliedbügel sind durch den Steg verriegelbar. Auch hier ist der Steg durch zwei außen liegende Verriegelungsbausteine, die über einen Federzapfen miteinander gekoppelt sind, ausgebildet.

Aus der DE 199 01 231 A1 ist ein gattungsbildendes Kettenschloss bekannt, bei dem zwei Gliedbügel über einen Verriegelungsbaustein mittels eines Fixierstiftes in Querrichtung miteinander gekoppelt sind.

Aufgabe der vorliegenden Erfindung ist es, ausgehend vom Stand der Technik eine Verriegelungsmöglichkeit für ein gattungsbildendes Kettenschloss bereit zu stellen, welches in seiner Praktikabilität zur Verriegelung vereinfacht, zugleich jedoch präzise ausgebildet ist und gleichzeitig eine verbesserte Möglichkeit zum Lösen und Austreiben der Verriegelung bereit stellt.

Die zuvor genannte Aufgabe wird mit einem Kettenschloss gemäß den Merkmalen im Anspruch 1 gelöst.

Vorteilhafte Ausgestaltungsvarianten sind in den abhängigen Ansprüchen beschrieben.

Das Kettenschloss weist zwei über ihre Schenkel koppelbare Gliedbügel und ein quer zwischen die Schenkel einschiebbares Verriegelungselement auf. Die Gliedbügel sind im Wesentlichen U-förmig ausgebildet. Das Verriegelungselement ist durch zwei von entgegengesetzten Seiten einschiebbare Verriegelungsbausteine ausgebildet, welche durch eine diese in Querrichtung des Kettenschlosses durchgreifende Schraube gesichert sind. Erfindungsgemäß ist nunmehr vorgesehen, dass in einem Verriegelungsbaustein mindestens ein Fixierstift angeordnet ist. Der Fixierstift steht in Querrichtung gegenüber einer Stirnfläche des Verriegelungsbausteins über. Der Fixierstift greift im verriegelten Zustand der Verriegelungsbausteine in eine Ausnehmung des gegenüberliegenden Verriegelungsbausteins ein.

Dies bietet den Vorteil, dass während der Einsetzbewegung eine axiale Führung der von entgegengesetzten Seiten eingesetzten Verriegelungsbausteine ermöglicht wird. Im verriegelten Zustand wird ein Verlagern der Verriegelungsbausteine relativ zueinander aufgrund des Fixierstiftes vermieden.

Die in Querrichtung verlaufende Schraube wird bevorzugt mit einer Mutter gesichert und hält die in das Kettenschloss eingesetzten Verriegelungsbausteine im fixierten Zustand. Bevorzugt sind Schrauben und Muttern mit einem vorgegebenen Drehmoment angezogen. Insbesondere ist die Mutter eine selbstsichernde Mutter, beispielsweise mit einem Klemmteil. Insbesondere wird eine Keilsicherungsmutter verwendet.

Bevorzugt liegen die inneren Stirnflächen der Verriegelungsbausteine im verriegelten Zustand formschlüssig aneinander an.

Weiterhin bevorzugt ist nicht nur ein Fixierstift, sondern es sind zwei Fixierstifte parallel zueinander versetzt angeordnet. Bevorzugt sind die Fixierstifte ebenfalls parallel zu der Schraube versetzt angeordnet. Die Fixierstifte greifen dann jeweils zum Teil in jeden Verriegelungsbaustein ein.

Die Fixierstifte selbst sind insbesondere aus metallischem Werkstoff ausgebildet und bevorzugt als massiver Stift ausgebildet. Bevorzugt ist an jedem Ende des Fixierstiftes eine Fase ausgebildet. Die Fixierstifte können somit in entsprechende Ausnehmungen in den Verriegelungsbausteinen eingesetzt werden.

Gemäß der vorliegenden Erfindung ist zur Montage der Verriegelungsbausteine der mindestens eine Fixierstift in einem Verriegelungsbaustein mit einer Presspassung angeordnet. Die Ausnehmung in dem gegenüberliegenden Verriegelungsbaustein ist im Verhältnis zu dem Fixierstift besonders bevorzugt als Spielpassung ausgebildet. Somit kann werksseitig der Fixierstift in die Presspassung eingedrückt werden. Am Montageort der zu verbindenden Kettenenden werden dann bei zusammengesetztem Kettenschloss die Verriegelungsbausteine von entgegengesetzten Seiten eingesetzt. Der Fixierstift kann aufgrund der Spielpassung, auch bei auftretenden Verschmutzungen und/oder bei leicht schiefem Ansetzten, dennoch in die Ausnehmung eingeführt werden. Im Anschluss wird dann die Schraube die beiden Verriegelungsbausteine durchgreifend eingesetzt und verschraubt.

Weiterhin bevorzugt ist zur Ausbildung der Presspassung eine Sacklochbohrung in einem Verriegelungsbaustein ausgebildet. Die Sacklochbohrung durchgreift den Verriegelungsbaustein insbesondere nicht vollständig. Zur Ausbildung der Ausnehmung des gegenüberliegenden Verriegelungsbausteins mit der Spielpassung ist diese bevorzugt auch als Sacklochbohrung ausgebildet.

Eine alternative, weiterhin bevorzugte Ausgestaltungsvariante sieht jedoch vor, dass die Ausnehmung zur Ausbildung der Spielpassung als Durchgangsbohrung ausgebildet ist.

Die Durchgangsbohrung weist in ihrer Längserstreckung bevorzugt voneinander verschiedene Durchmesser auf, wobei ein zur äußeren Stirnseite gerichteter Durchmesser kleiner ist als ein zur inneren Stirnseite gerichteter Durchmesser. Der zur inneren Stirnseite des Verriegelungsbausteins gerichtete Durchmesser bildet dann mit dem Außendurchmesser des Fixierstiftes die Presspassung. Der nach außen gerichtete kleinere Durchmesser der Durchgangsbohrung ist kleiner ausgebildet als der Außendurchmesser des Fixierstiftes. Während des Einpressvorgangs des Fixierstiftes kann somit Luft entweichen.

Weiterhin bevorzugt ist zwischen stirnseitigem Ende des Fixierstiftes und Boden der Sacklochbohrung der Presspassung ein Spalt ausgebildet. Bei Vormontage des Verriegelungsbausteines kommt bevorzugt ein Ende des Fixierstiftes in formschlüssigen Anschlag mit dem Ende der Durchgangsbohrung mit größerem Durchmesser zur Anlage. Zwischen Fixierstift und Durchgangsbohrung mit größerem Durchmesser ist eine Presspassung ausgebildet.

Weiterhin bevorzugt sind die zwei Fixierstifte bezogen auf eine Mittellängsebene durch das Verriegelungselement diagonal zueinander versetzt.

Die Schraube ist weiterhin bevorzugt als durchgehende Schraube mit einem Schraubenkopf ausgebildet, welche auf der dem Schraubenkopf gegenüberliegenden Seite mit einer Mutter gesichert ist. In einem Sicherungsbaustein kann an einer außenliegenden Stirnseite eine gegenüber der Stirnseite vertiefte Nut ausgebildet sein, wobei der Schraubenkopf in der Nut verdrehsicher aufgenommen ist. Hierzu bietet sich insbesondere eine Schraube mit einem Außensechskant an. Es kann jedoch auch ein Außenvierkant verwendet werden. Bei Aufsetzen der Mutter auf der gegenüberliegenden Seite muss nur diese festgezogen werden. Ein Kontern der Schraube auf der gegenüberliegenden Seite kann entfallen. Im Rahmen der Erfindung ist auch eine inverse Anordnung vorstellbar, so dass die Mutter verdrehsicher in einer Nut angeordnet ist. Als Schraube kann dann auch ein runder Schraubenkopf mit Innensechskant verwendet werden.

Weiterhin bevorzugt ist auf einer außenliegenden Stirnseite eines Sicherungsbausteins eine gegenüber der Stirnseite versenkte Vertiefung, insbesondere zur Aufnahme der Mutter ausgebildet. Die Vertiefung weist besonders bevorzugt eine seitliche Öffnung bzw. Ausnehmung auf. Nach Benutzung des Kettenschlosses kann durch die seitliche Öffnung ein Meißel oder anderweitiges Werkzeug angesetzt werden und durch Schlagkrafteinwirkung die Mutter aufgesprengt werden. Insbesondere wird die Schraube in diesem Bereich abgeschert. Im Anschluss daran kann der verbleibende Rest der Schraube ausgetrieben werden, genauso wie die Sicherungsbausteine. Ein aufwendiges Lösen, insbesondere der festgezogenen und gegebenenfalls korrodierten Schraubverbindung, kann damit vermieden werden.

In einer weiteren bevorzugten Ausführungsvariante weist die außen liegende Stirnseite eines jeden Sicherungsbausteins seitliche Erhebungen auf, die in Flächenrichtung der Stirnseite gerichtet sind. Diese Erhebungen stehen somit über der Mantelfläche des jeweiligen Sicherungsbausteins über. Im in das Kettenschloss eingesetzten Zustand greifen diese Erhebungen bevorzugt in eine Seitennut der Schenkel des Kettenschlosses ein. Hierdurch ist die Einschubbewegung eines jeden Sicherungsbausteins in Querrichtung zu dem Kettenschloss begrenzt. Darüber hinaus kann hier eine verdrehsichere Lage der Sicherungsbausteine in dem Kettenschloss realisiert werden. Ferner wird eine Begrenzung in Längsrichtung vorgenommen.

Weiterhin bevorzugt sind die Sicherungsbausteine im Querschnitt rechteckig ausgebildet. Alternativ sind zwei gegenüberliegende Flächen der Außenmantelfläche der Sicherungsbausteine parallel zueinander verlaufend. Auch hierdurch sind die Sicherungsbausteine verdrehsicher in dem Kettenschloss angeordnet. Damit der Sicherungsbaustein nicht orthogonal zur Querrichtung abschert, ist weiterhin bevorzugt an der Innenseite der Schenkel abschnittsweise ein in Querrichtung verlaufender Steg ausgebildet. In den Außenmantelflächen der Sicherungsbausteine ist eine dazu korrespondierende Nut ausgebildet. Beim Einsetzen von Sicherungsbausteinen greifen somit Steg und Nut formschlüssig ineinander. Hierzu kann insbesondere der Steg nur teilweise über die Breite des Kettenschlosses ausgebildet sein. Bevorzugt erstreckt sich der Steg mit einer Länge von 70 % bis 90 % der Breite des Kettenschlosses. Auch hierdurch kann nochmals ein Verrutschen orthogonal in Querrichtung des eingesetzten Sicherungselementes, auch optional ohne die über die Stirnseiten überstehenden Erhebungen, realisiert werden.

In einer weiteren bevorzugten Ausführungsvariante weisen die Sicherungsbausteine an ihrer Außenmantelfläche eine sich zur inneren Stirnseite vergrößernde Mulde auf. An dem gegenüberliegenden Sicherungsbaustein kann somit ein Austreiber an der inneren Stirnseite angesetzt werden und dieser durch Schlagkrafteinwirkung aus der Lage innerhalb des Kettenschlosses herausgetrieben werden. Im Anschluss daran kann der Sicherungsbaustein mit der Mulde von der gegenüberliegenden Seite aus dem Kettenschloss ausgetrieben werden.

Weitere Vorteile, Merkmale, Eigenschaften und Aspekte der vorliegenden Erfindung sind Gegenstand der nachfolgenden Beschreibung. Bevorzugte Ausführungsvarianten sind in den schematischen Figuren dargestellt. Diese diesen dem einfachen Verständnis der Erfindung. Es zeigen:
- Figur 1a bis f: eine erste Ausgestaltungsvariante des erfindungsgemäßen Kettenschlosses in verschiedenen Ansichten,
- Figur 2, 3 und 4: verschiedene Schnittansichten durch das erfindungsgemäße Kettenschloss gemäß Figur 1a,
- Figur 5a bis e: verschiedene Ansichten eines Verriegelungselementes für das in Figur 1 dargestellte Kettenschloss,
- Figur 6 und 7: zwei Schnittansichten durch das Verriegelungselement gemäß Figur 5,
- Figur 8: ein alternatives erfindungsgemäßes Kettenschloss,
- Figur 9: eine Schnittansicht gemäß Schnittlinie B - B aus Figur 8,

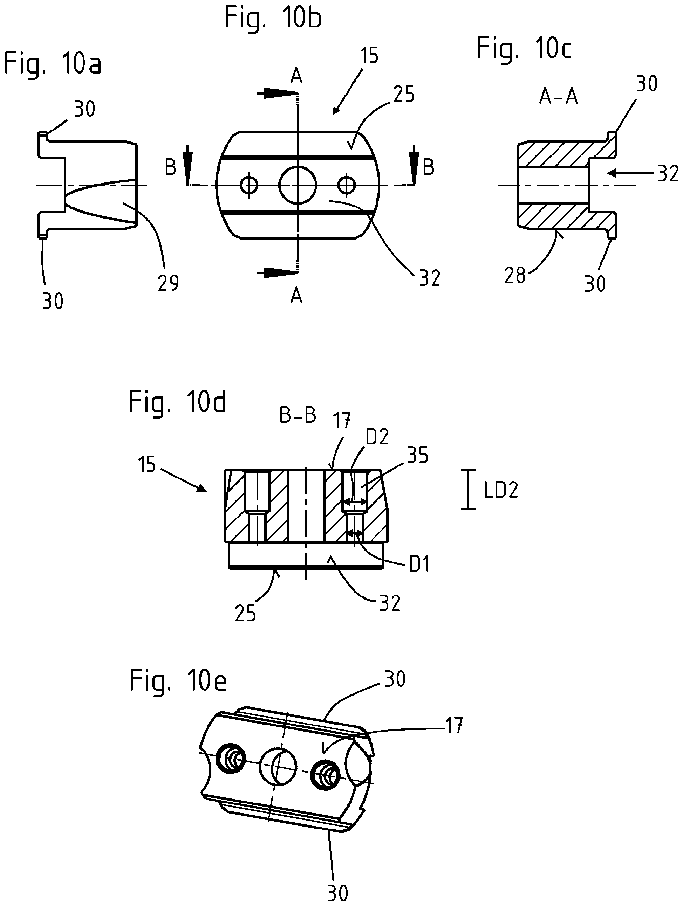

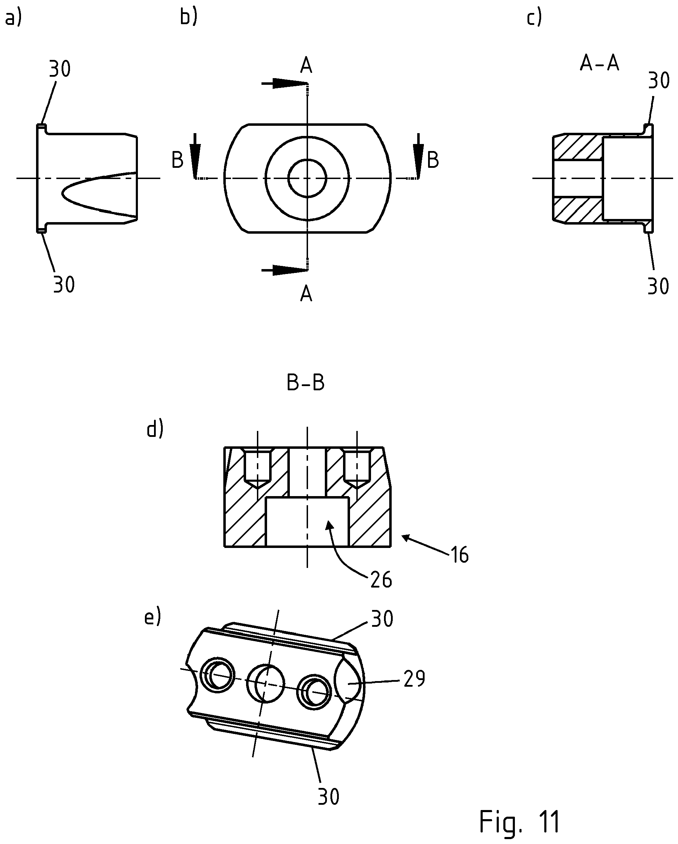

- Figur 10a bis e und Figur 11a bis e: verschiedene Ansichten der Verriegelungsbausteine für das Kettenschloss gemäß Figur 8,
- Figur 12: einen Gliedbügel eines Kettenschlosses mit einem Steg an einer innenliegenden Fläche des Schenkels und
- Figur 13: zwei Sicherungsbausteine mit einer in Querrichtung verlaufenden Nut.

In den Figuren werden für gleiche oder ähnliche Bauteile dieselben Bezugszeichen verwendet, auch wenn eine wiederholte Beschreibung aus Vereinfachungsgründen entfällt.

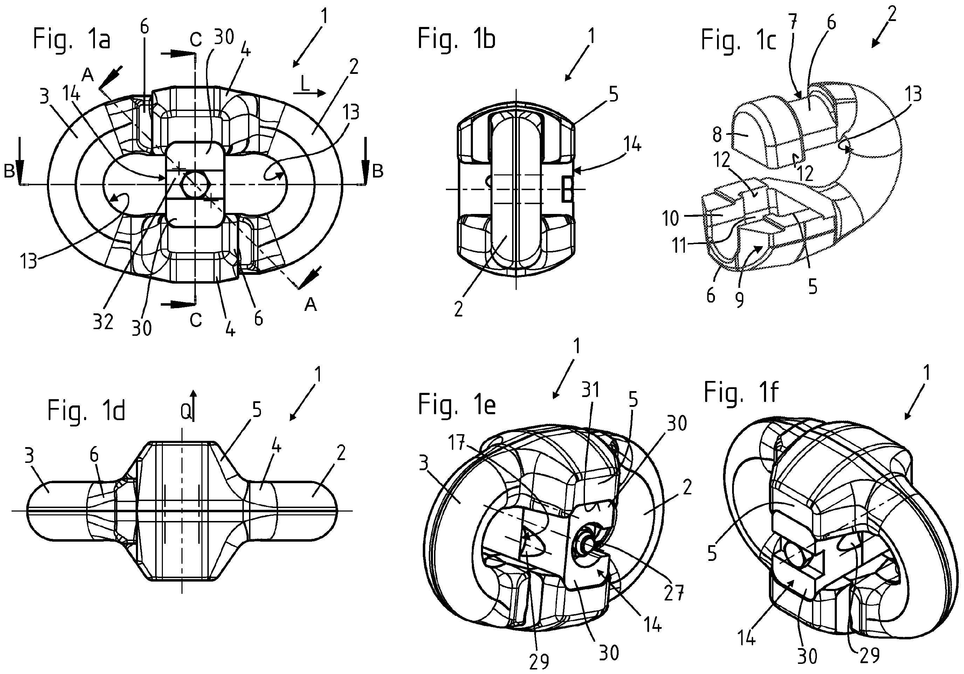

Figur 1a bis f zeigen ein erfindungsgemäße erste Ausführungsvariante eines Kettenschlosses 1. Das Kettenschloss 1 ist ausgebildet aus zwei Gliedbügeln 2, 3, die formschlüssig ineinander greifen. Die Gliedbügel 2, 3 weisen dazu jeweils sich in Längsrichtung L erstreckende Schenkel auf, so dass ein jeder Gliedbügel 2, 3 als im Wesentlichen U-förmiger Körper ausgebildet ist. Im mittleren Bereich weisen diese in Querrichtung Q eine Verdickung 5 auf.

Gemäß Figur 1c ist nur ein Gliedbügel 2 mit der Verdickung 5 in perspektivischer Ansicht dargestellt. Bevorzugt sind beide Gliedbügel 2, 3 identisch aufgebaut und werden spiegelverkehrt ineinander gesetzt. Ein Schenkel 6 eines jeden Gliedbügels 2, 3 weist einen Halsabschnitt 7 sowie einen demgegenüber verdickten Zapfen 8 auf. Am anderen Ende 9 des gegenüberliegenden Schenkels 6 sind korrespondierend eine Halsausnehmung 10 und eine Zapfenausnehmung 11 vorgesehen. An jedem Zapfen 8 sowie an jeder Zapfenausnehmung 11 sind Flankenflächen 12 vorgesehen, welche insbesondere konisch verlaufen.

Die Gliedbügel 2, 3 sind aus einem Stahlwerkstoff hergestellt. Insbesondere erfolgt die Herstellung durch Schmieden. In einem entsprechenden Bügelabschnitt 13 kann dann das endseitige Glied einer nicht näher dargestellten Kette eingelegt werden.

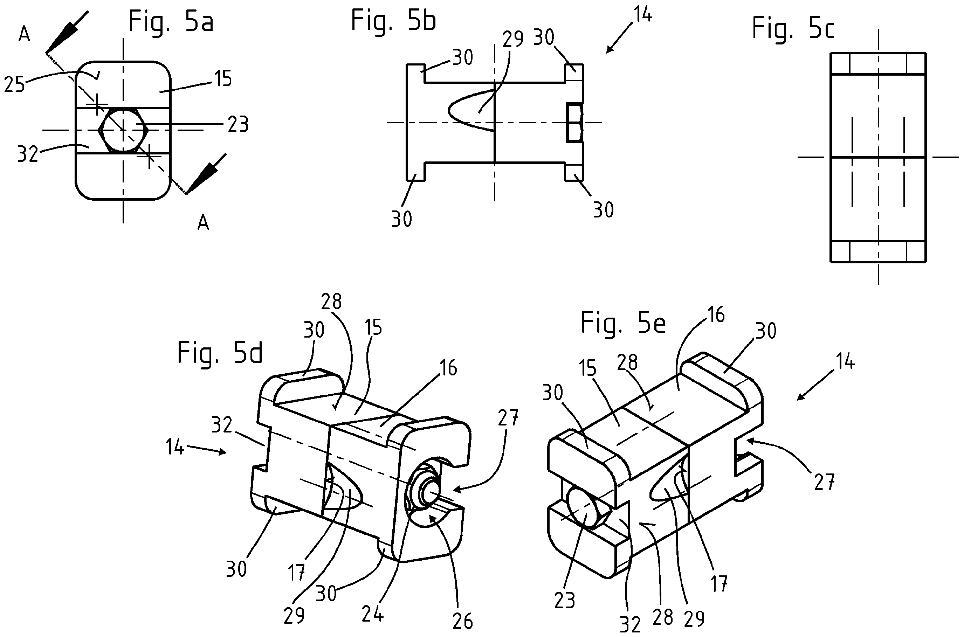

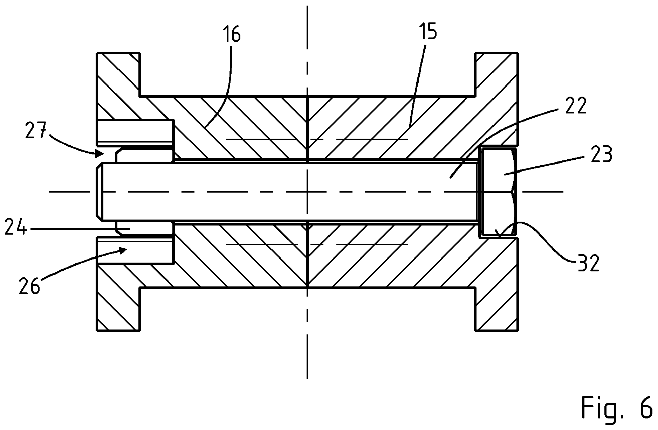

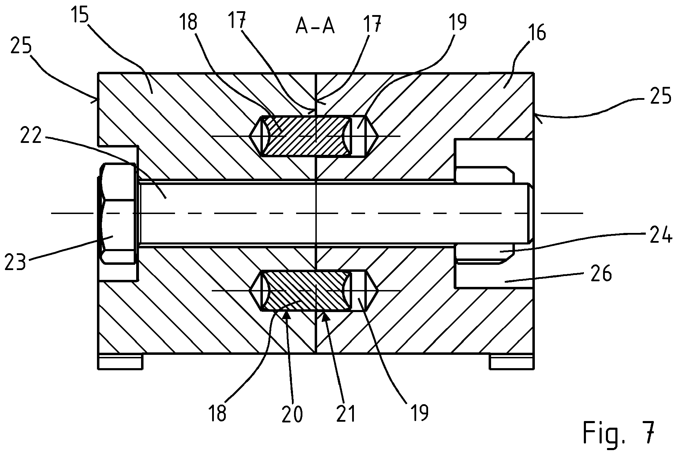

Erfindungsgemäß ist nunmehr ein Verriegelungselement 14 mittig in Querrichtung zwischen die ineinander gesteckten Gliedbügel 2, 3 eingesetzt. Das Verriegelungselement 14 ist weiterhin in verschiedenen Ansichten in Figur 5a bis 5e sowie in zwei Schnittansichten in Figur 6 und 7 dargestellt. Das Verriegelungselement 14 weist zwei Verriegelungsbausteine 15, 16 auf, die im eingesetzten Zustand mit ihren inneren Stirnseiten 17 aneinander anliegen. Erfindungsgemäß ist nunmehr vorgesehen, dass mindestens ein, und im vorliegenden Fall zwei Fixierstifte 18 angeordnet sind, die über die Stirnseiten 17 vorstehen und somit jeweils mit einem Teil in die Verriegelungsbausteine 15, 16 eingreifen. Die Fixierstifte 18 sind im hier dargezeigten Ausführungsbeispiel in dem Verriegelungsbaustein 15 mit einer Presspassung 20 angeordnet. Bei ineinander Einführen der Verriegelungsbausteine 15, 16 in das Kettenschloss 1 von entgegengesetzten Seiten in Querrichtung Q greifen somit die gegenüber der inneren Stirnseite 17 des Verriegelungsbausteins 15 überstehenden Fixierstifte 18 in eine jeweilige Ausnehmung 19 des Verriegelungsbausteins 16 ein. Im verriegelten Zustand ist zwischen dem Fixierstift 18 und der Ausnehmung 19 eine Spielpassung 21 ausgebildet. Somit wird ein einfaches Einschieben auch bei eventuell vorhandenen Verschmutzungen und/oder Verkanten beider Verriegelungsbausteine 15, 16 zueinander ermöglicht.

Im verriegelten Zustand verbleibt ein hier dargestellter Spalt zwischen Ende des Fixierstiftes 18 und der Ausnehmung 19, so dass die Stirnseiten 17 der beiden Verriegelungsbausteine 15, 16 vollständig aneinander anliegen.

Damit die Verriegelungsbausteine 15, 16 in Querrichtung Q fixiert werden, ist eine Schraube 22 vorgesehen, welche beide Verriegelungsbausteine 15, 16 durchgreift. Die Schraube 22 weist einen Schraubenkopf 23 auf, hier dargestellt in Form eines Außensechskants. Auf der gegenüberliegenden Seite ist auf die Schraube 22 eine Mutter 24 aufgeschraubt. Die Mutter 24 ist in einer gegenüber der äußeren Stirnseite 25 des Verriegelungsbausteins 16 vertieft angeordneten Vertiefung 26 angeordnet. Die Schraube 22 und die Mutter 24 stehen somit nicht über die Verriegelungsbausteine 15, 16 seitlich über.

Die Vertiefung 26 weist weiterhin erfindungsgemäß eine seitlich angeordnete Öffnung 27 auf. Hier ist es möglich, jedoch nicht näher dargestellt, einen Meißel oder ein anderes Austreiberwerkzeug anzusetzen und somit die Mutter 24 aufzusprengen. Der Teil der Schraube 22, auf welchen die Mutter 24 aufgeschraubt ist, wird abgeschert. Die Schraube 22 kann dann in Querrichtung Q in Richtung zu dem Schraubenkopf 23 aus dem Verriegelungsbaustein 15 ausgetrieben werden.

Ist die Schraube 22 ausgetrieben, ist weiterhin vorgesehen, dass an einer Außenmantelfläche 28 der Verriegelungsbaustein eine zur inneren Stirnseite zunehmenden Mulde 29 ausgebildet ist. Auch in dieser Mulde 29 ist es nunmehr möglich, einen Austreiber anzusetzen. Somit kann der jeweils gegenüberliegende Verriegelungsbaustein 15, 16 in Querrichtung Q ausgetrieben werden.

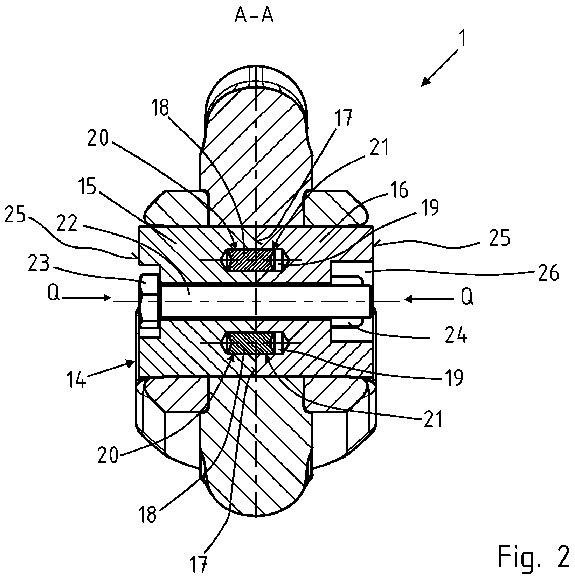

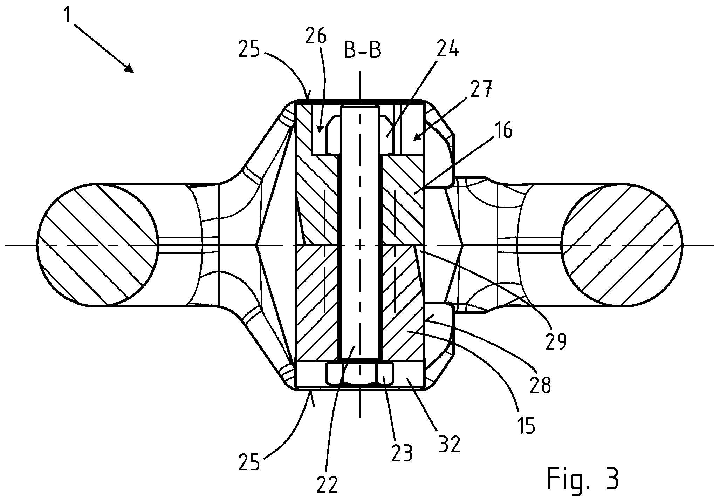

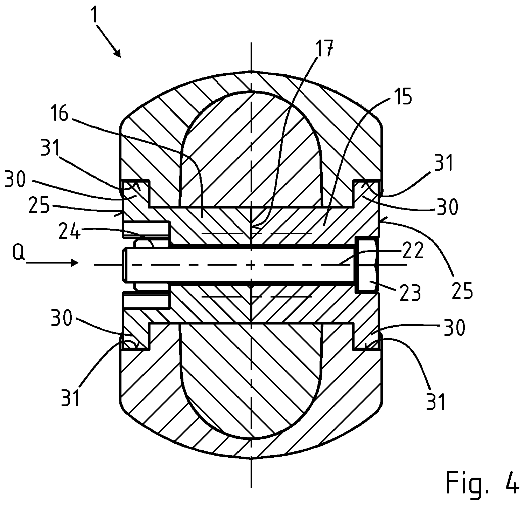

Weiterhin erfindungsgemäß weisen die Verriegelungsbausteine 15, 16 an ihren äußeren Stirnseiten 25 seitlich gegenüber den Stirnseiten ausgebildete Erhebungen 30 auf. Die Erhebungen 30 erstrecken sich somit orthogonal zur Querrichtung Q. Die Erhebungen 30 greifen formschlüssig in eine jeweilige Seitennut 31 an den Gliedbügeln 2, 3 ein. Die Erhebungen 30 können auch als seitlich abstehende Flanken bezeichnet werden. Zum einen verhindern die Erhebungen 30 bei Einsetzen der Sicherungsbausteine 15, 16 in Querrichtung Q ein zu weites Einschieben. Zum anderen bilden die Erhebungen 30 zweier über die Schraube 22 miteinander gekoppelter Sicherungsbausteine 15, 16 einen derartigen Formschluss aus, dass beispielsweise die gemäß Figuren 2 bis 4 eingesetzten Sicherungsbausteine 15, 16 nicht in Querrichtung Q aus dem Kettenschloss 1 herausgleiten. Darüber hinaus bilden die seitlichen Erhebungen 30, gut dargestellt in Figuren 1e und f, eine jeweilige Verdrehsicherung. Die Seitennuten 31 sind dazu die Erhebungen 30 formschlüssig umgreifend.

Ferner ist bevorzugt in dem Sicherungsbaustein 15 an der äußeren Stirnseite 25 eine Nut 32 ausgebildet. In der Nut 32 ist der Schraubenkopf 23 verdrehsicher gelagert. Somit wird lediglich ein Werkzeug zum Festziehen der Schraube 22 benötigt, der Schraubenkopf 23 wird selbst verdrehsicher durch die Nut 32 gehalten. Gleichzeitig ist der Schraubenkopf 23 gegenüber der äußeren Stirnseite 25 versenkt gelagert. In Figur 5a sowie Figur 1a und Figur 2 ist dargestellt, dass die Fixierstifte 18 parallel zueinander diagonal versetzt sind.

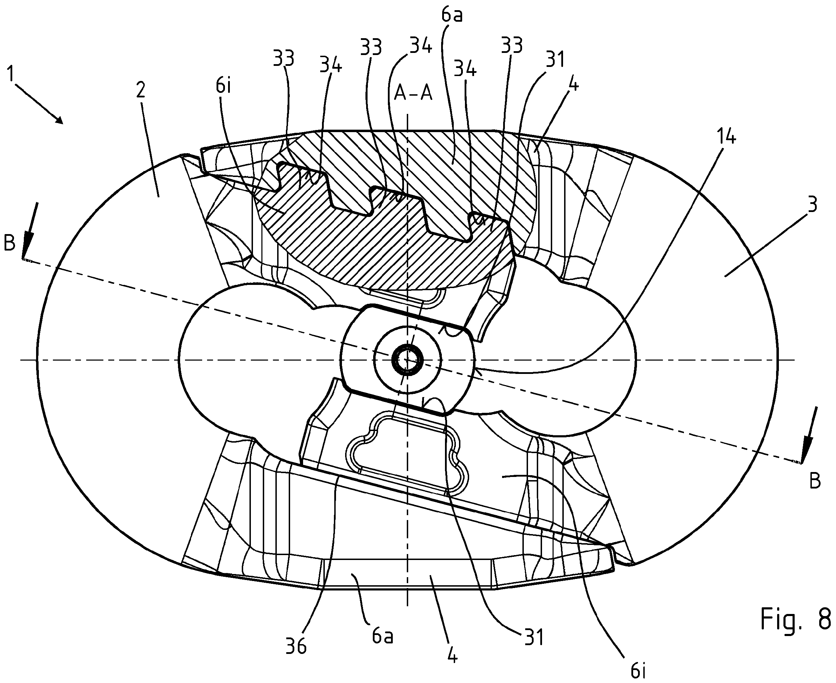

In Figur 8 ist eine alternative Ausgestaltungsvariante des erfindungsgemäßen Kettenschlosses 1 dargestellt. Auch hier ist das Kettenschloss 1 durch zwei Gliedbügel 2, 3 ausgebildet. Die Gliedbügel 2, 3 sind ebenfalls im Wesentlichen U-förmig ausgebildet. Im Unterschied zu der Ausgestaltungsvariante von Figur 1 ist jedoch nicht im mittleren Bereich eine Verdickung ausgebildet. Vielmehr verlaufen die Schenkel 6 gemäß der Teilschnittansicht von Figur 8 mit einer Schräge 36, so dass jeweils ein außen liegender Schenkel 6a sowie ein innen liegender Schenkel 6i ausgebildet sind.

Gegenüber dem innenliegenden Schenkel 6i sind Zähne 33 vorstehend ausgebildet, welche in Taschen 34 des außen liegenden Schenkels 6a formschlüssig eingreifen.

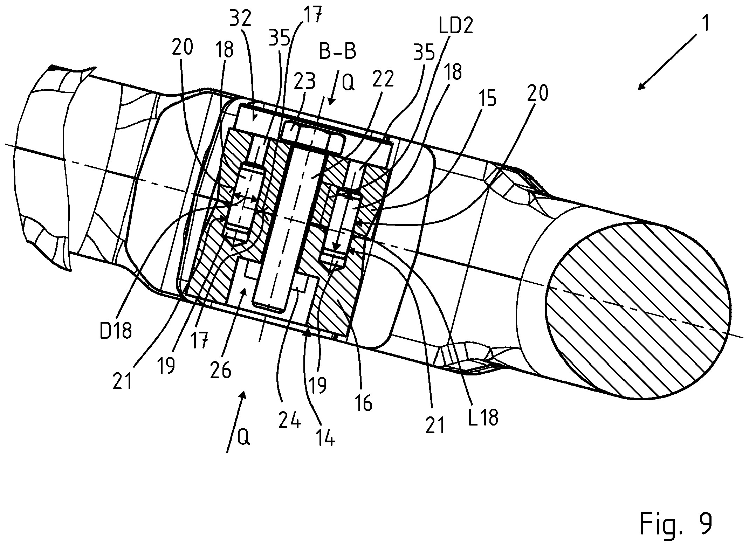

Sind die zwei Bügelkörper gemäß Kettenschloss von Figur 8 miteinander verriegelt, ist auch hier mittig in Querrichtung Q ein Verriegelungselement 14 eingesetzt, welches durch zwei Verriegelungsbausteine 15, 16 ausgebildet ist. Die Verriegelungsbausteine 15, 16 sind gemäß Querschnittsansicht von Figur 9 von entgegengesetzten Seiten in Querrichtung Q eingesetzt und liegen mit ihren inneren Stirnseiten 17 formschlüssig aneinander.

Auch hier sind Fixierstifte 18 jeweils über die Stirnseiten 17 überstehend und somit teilweise in den gegenüberliegenden Verriegelungsbausteinen 15, 16 eingreifend angeordnet. Bevorzugt sind die Fixierstifte 18 hierzu auch wiederum in dem Verriegelungsbaustein 15 mit einer Presspassung 20 angeordnet und in der dem gegenüberliegenden Verriegelungsbaustein 16 mit einer Spielpassung 21.

Ein Durchmesser D1 der Durchgangsbohrung 35 zur äußeren Stirnseite 25 gerichtet ist dabei kleiner ausgebildet als ein Durchmesser D2, welcher zur inneren Stirnseite 17 hin gerichtet ist. Der Durchmesser D2 ist kleiner als der Durchmesser D18 des Fixierstiftes 18 ausgebildet, so dass eine Presspassung 20 entsteht. Der Durchmesser D1 ist kleiner als der Durchmesser D2 und auch kleiner als der Durchmesser D18 ausgebildet. Werden nunmehr die beiden Verriegelungsbausteine 15, 16 gegeneinander anliegend in das Kettenschloss eingesetzt, so kommt der Fixierstift 18 in die Ausnehmung 19 des gegenüberliegenden Verriegelungsbausteins 16 zur Anlage. Es verbleibt im vollständig verriegelten Zustand ein Freiraum zwischen Ende des Fixierstiftes 18 und dem Grund des Sacklochs. Die Länge LD2 entspricht daher ca. 30 % bis 70 %, vorzugsweise 40 % bis 60 % der Länge L18 des Fixierstiftes 18.

Auch die Verriegelungsbausteine 15, 16 gemäß der Ausbildungsvariante von Figur 8 weisen eine seitliche Mulde 29 auf, so dass die eingesetzten Verriegelungsbausteine 15, 16 durch Einsetzen eines Austreibers an der Mulde jeweils gegenüberliegend in Querrichtung Q ausgetrieben werden können.

Ferner weist der Verriegelungsbaustein 15 an seiner äußeren Stirnseite 25 eine Nut 32 auf, in welche der Schraubenkopf 23 formschlüssig und verdrehsicher aufgenommen ist. Somit kann die Mutter 24 in eine an dem Verriegelungsbaustein 16 ausgebildeten Vertiefung 26 eingesetzt werden und festgezogen werden.

Die Verriegelungsbausteine 15, 16 gemäß der zweiten Ausführungsvariante des Kettenschlosses 1 weisen ebenfalls an der äußeren Stirnseite 25 nach außen in Flächenrichtung der Stirnseite abstehende Erhebungen 30 auf, welche in eine jeweilige Seitennut 31 in den Gliedbügeln 2, 3 formschlüssig eingreifen. Die Erhebungen 30 stehen gegenüber der Außenmantelfläche 28 der Verriegelungsbausteine 15, 16 über.

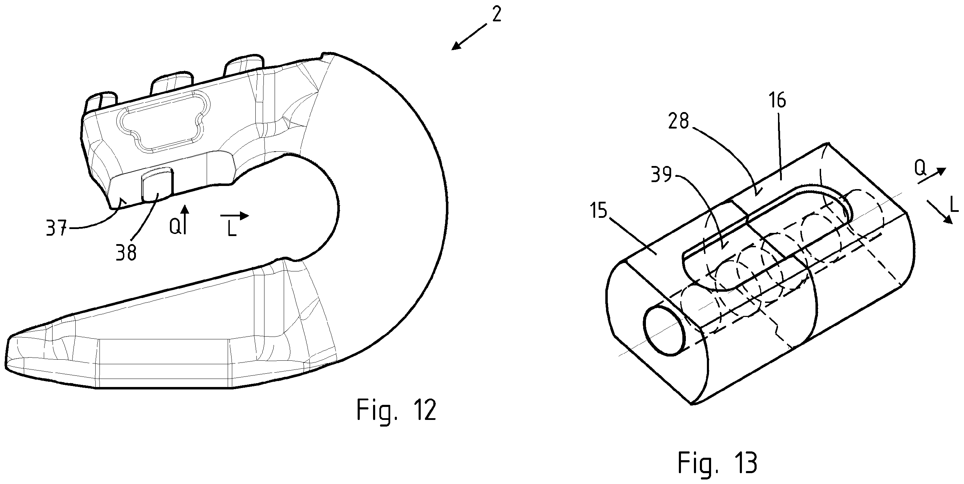

In Figur 12 ist ein Gliedbügel 2 gezeigt, welcher an einer inneren Fläche 37 ein gegenüber der Fläche 37 vorstehenden Steg 38 aufweist. Der Steg 38 erstreckt sich in Querrichtung Q über einen Teil der Breite. Bei zusammengesetzten Sicherungsbausteinen 15, 16 ist gemäß Figur 13 eine gegenüber deren Außenmantelfläche 28 vertiefte Nut 39 ausgebildet. Beim Einsetzen der Sicherungbausteine kommen Steg 38 und Nut 39 formschlüssig zueinander in Eingriff. Beide Sicherungsbausteine sind somit in Querrichtung Q, aber auch in Längsrichtung L formschlüssig in dem Kettenschloss 1 gesichert.

### Bezugszeichen:

- 1 -: Kettenschloss
- 2 -: Gliedbügel
- 3 -: Gliedbügel
- 4 -: Schenkel
- 5 -: Verdickung
- 6 -: Schenkel
- 6a -: außenliegender Schenkel
- 6i -: innenliegender Schenkel
- 7 -: Halsabschnitt
- 8 -: Zapfen
- 9 -: Ende
- 10 -: Halsausnehmung
- 11 -: Zapfenausnehmung
- 12 -: Flankenfläche
- 13 -: Bügelabschnitt
- 14 -: Verriegelungselement
- 15 -: Verriegelungsbaustein
- 16 -: Verriegelungsbaustein
- 17 -: innere Stirnseite
- 18 -: Fixierstift
- 19 -: Ausnehmung
- 20 -: Presspassung
- 21 -: Spielpassung
- 22 -: Schraube
- 23 -: Schraubenkopf
- 24 -: Mutter
- 25 -: äußere Stirnseite
- 26 -: Vertiefung
- 27 -: Öffnung zu 26
- 28 -: Außenmantelfläche zu 15, 16
- 29 -: Mulde
- 30 -: Erhebung
- 31 -: Seitennut
- 32 -: Nut
- 33 -: Zähne
- 34 -: Taschen
- 35 -: Durchgangsbohrung
- 36 -: Schräge
- 37 -: Fläche
- 38 -: Steg
- 39 -: Nut

- D1 -: Durchmesser
- D2 -: Durchmesser
- D18 -: Durchmesser zu 18
- L -: Längsrichtung
- LD2 -: Länge Durchmesser D2
- L18 -: Länge von 18
- Q -: Querrichtung

## Patentansprüche

1. Kettenschloss (1), aufweisend zwei über ihre Schenkel (4) koppelbare Gliedbügel (2, 3) und ein quer zwischen die Schenkel (4) einschiebbares Verriegelungselement (14), wobei das Verriegelungselement (14) durch zwei von entgegengesetzten Seiten einschiebbare Verriegelungsbausteine (15, 16) ausgebildet ist, welche durch eine diese in Querrichtung (Q) des Kettenschlosses (1) durchgreifende Schraube (22) gesichert sind, **dadurch gekennzeichnet, dass** in einem Verriegelungsbaustein (15) mindestens ein Fixierstift (18), in Querrichtung (Q) gegenüber einer Stirnfläche (17) überstehend, angeordnet ist und dass der Fixierstift (18) in eine Ausnehmung (19) des gegenüberliegenden Verriegelungsbausteins (16) eingreift, wobei der Fixierstift (18) in einem Verriegelungsbaustein (15) mit einer Presspassung (20) angeordnet ist und dass die Ausnehmung (19) in dem gegenüberliegenden Verriegelungsbaustein (16) als Spielpassung (21) ausgebildet ist.

2. Kettenschloss (1) nach Anspruch 1, **dadurch gekennzeichnet, dass** die Stirnseiten (17) der Verriegelungsbausteine (15, 16) im verriegelten Zustand formschlüssig aneinander liegen.

3. Kettenschloss (1) nach den Ansprüchen 1 oder 2, **dadurch gekennzeichnet, dass** zur Ausbildung der Presspassung eine Sacklochbohrung in einem Verriegelungsbaustein (15, 16) ausgebildet ist und optional eine zusätzliche Durchgangsbohrung (35) ausgebildet ist.

4. Kettenschloss nach dem vorhergehenden Anspruch, **dadurch gekennzeichnet, dass** die Durchgangsbohrung (35) längenabschnittsweise voneinander verschiedene Durchmesser D1, D2 aufweist, wobei ein zur äußeren Stirnseite (25) gerichteter Durchmesser D1 kleiner als ein zur inneren Stirnseite (17) gerichteter Durchmesser D2 ausgebildet ist.

5. Kettenschloss (1) nach dem vorhergehenden Anspruch, **dadurch gekennzeichnet, dass** der nach außen gerichtete Durchmesser D1 kleiner ausgebildet ist als ein Durchmesser D18 des Fixierstiftes (18).

6. Kettenschloss (1) nach Anspruch 4 oder 5, **dadurch gekennzeichnet, dass** eine axiale Länge LD2 der Durchgangsbohrung (35) mit größerem Durchmesser kleiner gleich 70 % und größer gleich 30 %, insbesondere kleiner gleich 60 % und größer gleich 40 % der axialen Länge L18 des Fixierstiftes (18) ist.

7. Kettenschloss (1) nach einem der Ansprüche 1 bis 6, **dadurch gekennzeichnet, dass** zwei Fixierstifte (18) vorgesehen sind, welche parallel zueinander versetzt angeordnet sind.

8. Kettenschloss (1) nach dem vorhergehenden Anspruch, **dadurch gekennzeichnet, dass** die zwei Fixierstifte (18) bezogen auf eine diagonale Querschnittebene parallel versetzt zueinander angeordnet sind.

9. Kettenschloss (1) nach einem der Ansprüche 1 bis 8, **dadurch gekennzeichnet, dass** die Schraube (22) als durchgehende Schraube (22) ausgebildet ist, die auf einer dem Schraubenkopf (23) gegenüberliegenden Seite mit einer Mutter (24) gesichert ist, bevorzugt über eine Mutter (24) mit Klemmteil, besonders bevorzugt eine Keilsicherungsmutter.

10. Kettenschloss (1) nach einem der Ansprüche 1 bis 9, **dadurch gekennzeichnet, dass** in einem Sicherungsbaustein an einer außenliegenden Stirnseite (25) eine Nut (32) ausgebildet ist, wobei der Schraubenkopf (23) in der Nut (32) verdrehsicher aufgenommen ist.

11. Kettenschloss (1) nach einem der Ansprüche 1 bis 10, **dadurch gekennzeichnet, dass** auf einer außenliegenden Stirnseite (25) eines Sicherungsbausteines eine gegenüber der Stirnseite versenkte Vertiefung (26) zur Aufnahme der Mutter (24) ausgebildet ist.

12. Kettenschloss (1) nach dem vorhergehenden Anspruch, **dadurch gekennzeichnet, dass** die Vertiefung (26) eine seitlich Öffnung (27) aufweist.

13. Kettenschloss (1) nach einem der Ansprüche 1 bis 12, **dadurch gekennzeichnet, dass** die außenliegenden Stirnseiten (25) der Sicherungsbausteine Erhebungen (30) aufweisen, die gegenüber einer Mantelfläche (28) des Sicherungsbausteins überstehen, wobei die Erhebungen (30) formschlüssig in einer Seitennut (31) der Schenkel (6) zur Anlage kommen.

14. Kettenschloss (1) nach einem der Ansprüche 1 bis 13, **dadurch gekennzeichnet, dass** die Sicherungsbausteine im Querschnitt rechteckig ausgebildet sind, insbesondere mit abgerundeten Ecken.

15. Kettenschloss (1) nach einem der Ansprüche 1 bis 14, **dadurch gekennzeichnet, dass** in den innenliegenden Flächen der Schenkel (6) ein quer verlaufender Steg (38) ausgebildet ist und in den Außenmantelflächen (28) der Sicherungsbausteine eine Nut (39).

16. Kettenschloss (1) nach einem der Ansprüche 1 bis 15, **dadurch gekennzeichnet, dass** in einer Außenmantelfläche (28) der Sicherungsbausteine (15, 16) eine sich zur inneren Stirnseite (17) vergrößernde Mulde (29) ausgebildet ist, dergestalt, dass eine Anlagenfläche an der innenliegenden Stirnseite (17) des gegenüberliegenden Sicherungsbausteins (15, 16) freigelegt ist und ein Austreiber angesetzt werden kann.

## Claims

1. Chain lock (1), having two link bows (2, 3) which can be coupled by means of the legs (4) thereof, and having a locking element (14) which can be inserted transversely between the legs (4), wherein the locking element (14) is formed by two locking components (15, 16) which can be inserted from opposite sides and which are secured by a screw (22) which passes through these in the transverse direction (Q) of the chain lock (1), **characterised in that** at least one fixing pin (18) is arranged in a locking component (15), said fixing pin protruding towards a front surface (17) in the transverse direction (Q), and that the fixing pin (18) engages with a recess (19) of the opposite locking component (16), wherein the fixing pin (18) is arranged with a press fit (20) in a locking component (15), and that the recess (19) is formed as a clearance fit (21) in the opposite locking component (16).

2. Chain lock (1) according to claim 1, **characterised in that** the front sides (17) of the locking components (15, 16) adjoin each other in a positive manner in the locked state.

3. Chain lock (1) according to claim 1 or 2, **characterised in that**, for forming the press fit, a blind hole is formed in a locking component (15, 16) and optionally an additional through hole (35) is formed.

4. Chain lock according to the preceding claim, **characterised in that** the through hole (35) has diameters D1, D2 which differ from each other in length, wherein a diameter D1 pointed towards the outer front side (25) is formed to be smaller than a diameter D2 pointed towards the inner front side (17).

5. Chain lock (1) according to the preceding claim, **characterised in that** the diameter D1 pointed outwards is formed to be smaller than a diameter D18 of the fixing pin (18).

6. Chain lock (1) according to claim 4 or 5, **characterised in that** an axial length LD2 of the through hole (35) is, with a greater diameter, less than or equal to 70% and greater than or equal to 30%, in particular less than or equal to 60% and greater than or equal to 40% of the axial length L18 of the fixing pin (18).

7. Chain lock (1) according to any one of claims 1 to 6, **characterised in that** two fixing pins (18) are provided which are arranged in parallel, offset with respect to each other.

8. Chain lock (1) according to the preceding claim, **characterised in that** the two fixing pins (18) are arranged in parallel, offset with respect to each other, with regard to a diagonal cross-sectional plane.

9. Chain lock (1) according to any one of claims 1 to 8, **characterised in that** the screw (22) is formed as a through screw (22) which is secured with a nut (24) on a side opposite the screw head (23), preferably by means of a nut (24) having a clamping part, particularly preferably a wedge lock nut.

10. Chain lock (1) according to any one of claims 1 to 9, **characterised in that** a groove (32) is formed in a securing component on an outer-lying front side (25), wherein the screw head (23) is received in the groove (32) in a manner secure against rotation.

11. Chain lock (1) according to any one of claims 1 to 10, **characterised in that** an indentation (26) which is recessed with respect to the front side is formed to receive the nut (24) on an outer-lying front side (25) of a securing component.

12. Chain lock (1) according to the preceding claim, **characterised in that** the indentation (26) has a lateral opening (27).

13. Chain lock (1) according to any one of claims 1 to 12, **characterised in that** the outer-lying front sides (25) of the securing components have elevations (30) which project towards a cover surface (28) of the securing component, wherein the elevations (30) come into contact in a positive manner with a side groove (31) of the legs (6).

14. Chain lock (1) according to any one of claims 1 to 13, **characterised in that** the securing components are formed at a right angle in cross-section, in particular with rounded corners.

15. Chain lock (1) according to any one of claims 1 to 14, **characterised in that** a bar (38) which runs transversely is formed in the inner-lying surfaces of the legs (6) and a groove (39) in the outer cover surfaces (28) of the securing components.

16. Chain lock (1) according to any one of claims 1 to 15, **characterised in that** a hollow (29), which enlarges towards the inner front side (17), is formed in an outer cover surface (28) of the securing components (15, 16) in such a way that a contact surface is exposed on the inner-lying front side (17) of the opposite securing component (15, 16) and an expeller can be positioned.

## Revendications

1. Joint de chaîne (1) présentant deux étriers de maillon (2, 3) pouvant être couplés par leurs branches (4) et un élément de verrouillage (14) insérable transversalement entre les branches (4), dans lequel l'élément de verrouillage (14) est réalisé par deux modules de verrouillage (15, 16) insérables par des côtés opposés, qui sont bloqués par une vis (22) les traversant dans le sens transversal (Q) du joint de chaîne (1), **caractérisé en ce que** dans un module de verrouillage (15) au moins une tige de fixation (18) est agencée, dépassant dans le sens transversal (Q) par rapport à une surface avant (17) et que la tige de fixation (18) se met en prise dans un évidement (19) du module de verrouillage (16) opposé, dans lequel la tige de fixation (18) est agencée dans un module de verrouillage (15) avec un ajustage serré (20) et que l'évidement (19) est réalisé dans le module de verrouillage (16) opposé comme ajustage avec jeu (21).

2. Joint de chaîne (1) selon la revendication 1, **caractérisé en ce que** les côtés avant (17) des modules de verrouillage (15, 16) reposent l'un contre l'autre à complémentarité de formes dans l'état verrouillé.

3. Joint de chaîne (1) selon les revendications 1 ou 2, **caractérisé en ce que** pour la réalisation de l'ajustage serré un perçage à trou borgne est réalisé dans un module de verrouillage (15, 16) et en option un perçage traversant (35) supplémentaire est réalisé.

4. Joint de chaîne selon la revendication précédente, **caractérisé en ce que** le perçage traversant (35) présente des diamètres différents l'un de l'autre D1, D2 par sections de longueur, dans lequel un diamètre D1 dirigé vers le côté avant extérieur (25) est réalisé inférieur à un diamètre D2 dirigé vers le côté avant intérieur (17).

5. Joint de chaîne (1) selon la revendication précédente, **caractérisé en ce que** le diamètre D1 dirigé vers l'extérieur est réalisé inférieur à un diamètre D18 de la tige de fixation (18).

6. Joint de chaîne (1) selon la revendication 4 ou 5, **caractérisé en ce qu'**une longueur axiale LD2 du perçage traversant (35) avec un diamètre supérieur est inférieure ou égale à 70 % et supérieure ou égale à 30 %, en particulier inférieure ou égale à 60 % et supérieure ou égale à 40 % de la longueur axiale L18 de la tige de fixation (18).

7. Joint de chaîne (1) selon l'une quelconque des revendications 1 à 6, **caractérisé en ce que** deux tiges de fixation (18) sont prévues, lesquelles sont agencées en déport parallèlement l'une à l'autre.

8. Joint de chaîne (1) selon la revendication précédente, **caractérisé en ce que** les deux tiges de fixation (18) sont agencées en déport parallèlement l'une à l'autre par rapport à un plan de section transversale diagonale.

9. Joint de chaîne (1) selon l'une quelconque des revendications 1 à 8, **caractérisé en ce que** la vis (22) est réalisée comme vis traversante (22) qui est bloquée sur un côté opposé à la tête de vis (23) avec un écrou (24), de préférence par le biais d'un écrou (24) avec une partie de serrage, le plus préférentiellement un contre-écrou à coin.

10. Joint de chaîne (1) selon l'une quelconque des revendications 1 à 9, **caractérisé en ce qu'**une rainure (32) est réalisée dans un module de blocage au niveau d'un côté avant extérieur (25), dans lequel la tête de vis (23) est reçue sans pouvoir tourner dans la rainure (32).

11. Joint de chaîne (1) selon l'une quelconque des revendications 1 à 10, **caractérisé en ce que** sur un côté avant extérieur (25) d'un module de blocage une cavité (26) noyée par rapport au côté avant est réalisée pour la réception de l'écrou (24).

12. Joint de chaîne (1) selon la revendication précédente, **caractérisé en ce que** la cavité (26) présente une ouverture latérale (27).

13. Joint de chaîne (1) selon l'une quelconque des revendications 1 à 12, **caractérisé en ce que** les côtés avant extérieurs (25) des modules de blocage présentent des surélévations (30) qui dépassent par rapport à une surface enveloppe (28) du module de blocage, dans lequel les surélévations (30) entrent en appui à complémentarité de formes dans une rainure latérale (31) des branches (6).

14. Joint de chaîne (1) selon l'une quelconque des revendications 1 à 13, **caractérisé en ce que** les modules de blocage sont réalisés rectangulaires en section transversale, en particulier avec des coins arrondis.

15. Joint de chaîne (1) selon l'une quelconque des revendications 1 à 14, **caractérisé en ce qu'**une nervure (38) s'étendant transversalement est réalisée dans les surfaces intérieures des branches (6) et une rainure (39) dans les surfaces enveloppes extérieures (28) des modules de blocage.

16. Joint de chaîne (1) selon l'une quelconque des revendications 1 à 15, **caractérisé en ce qu'**un creux (29) s'agrandissant vers le côté avant intérieur (17) est réalisé dans une surface enveloppe extérieure (28) des modules de blocage (15, 16) de telle manière qu'une surface d'appui contre le côté avant intérieur (17) du module de blocage (15, 16) opposé soit libérée et un chasse-outils puisse être placé.
